# EUROPÄISCHE PATENTSCHRIFT

(11) **EP 2 059 698 B1**
(45) Veröffentlichungstag und Bekanntmachung des Hinweises auf die Patenterteilung: **12.09.2012**
(21) Anmeldenummer: 07787325.5
(22) Anmeldetag: 10.07.2007
(51) Int. Cl.: F16K 7/00

(54) **VERFAHREN ZUR HERSTELLUNG VON BAUTEILEN ZUR STEUERUNG EINES FLUIDFLUSSES SOWIE BAUTEILE, HERGESTELLT NACH DIESEM VERFAHREN**
METHOD OF PRODUCING COMPONENTS FOR CONTROLLING A FLUID FLOW AND COMPONENTS PRODUCED BY THIS METHOD
PROCEDE DE FABRICATION D'ELEMENTS POUR COMMANDER UN FLUX DE FLUIDE, ET ELEMENTS FABRIQUES D'APRES CE PROCEDE

(30) Priorität: 29.08.2006 DE 102006040343
(43) Veröffentlichungstag der Anmeldung: 20.05.2009
(73) Patentinhaber: Robert Bosch GmbH, 70442 Stuttgart (DE)
(72) Erfinder: PINTER, Stefan, 72764 Reutlingen (DE); PIRK, Tjalf, 71229 Leonberg (DE)
(86) Internationale Anmeldenummer: PCT/EP2007/057050
(87) Internationale Veröffentlichungsnummer: WO 2008/025601

(56) Entgegenhaltungen:
- EP-A1- 0 485 739
- WO-A-90/15933
- WO-A-94/00696
- DE-A1- 4 223 067
- DE-A1- 4 417 251
- DE-A1- 10 334 240
- US-A- 5 142 781
- MESSNER S ET AL: "A normally-closed, bimetallically actuated 3-way microvalve for pneumatic applications" MICRO ELECTRO MECHANICAL SYSTEMS, 1998. MEMS 98. PROCEEDINGS., THE ELEVENTH ANNUAL INTERNATIONAL WORKSHOP ON HEIDELBERG, GERMANY 25-29 JAN. 1998, NEW YORK, NY, USA,IEEE, US, 25. Januar 1998 (1998-01-25), Seiten 40-44, XP010270156 ISBN: 0-7803-4412-X

## Beschreibung

### Stand der Technik

Die Erfindung betrifft ein mikromechanisches Bauteil zur Steuerung eines Fluidflusses sowie ein Verfahren zu dessen Herstellung.

Die DE 103 34 240 A1 offenbart ein Verfahren zur Herstellung einer Mikropumpe. Der Herstellungsvorgang erfolgt beidseitig, das heißt übereinanderliegende Schichten werden sowohl während des Herstellungsvorgangs von der Unterseite als auch von der Oberseite her strukturiert und geätzt.

Die WO 94/00696 offenbart ein Mikroventil in einem schichtweisen Aufbau. Die Betätigung des Mikroventils erfolgt mit einem elektrischen Betriebsmittel. Ebenso zeigt die WO 90 /15933 ein Mikroventil, welches mittels einer Elektrode gesteuert wird. Dieses Mikroventil zeigt eine Druckausgleichsfläche und weist eine federnde Membran auf.

Die DE 44 17 251 A1 offenbart ein druckausgeglichenes Mikroventil, die EP 0 485 739 A1 ein Mikroventil in einem Mehrschichtenaufbau, die DE 42 23 067 A1 einen mikromechanischen Durchflußbegrenzer in Mehrschichtenstruktur, und Messner et al. "A Normally-Closed, Bimetallically Actuated 3-Way Microvalve for Pneumatic Applications", IEEE 1998, ISBN 07803-4412-X, Seiten 40 bis 44, ein 3-Wege-Mikroventil.

Die US 5,142,781 beschreibt ein Verfahren zur Herstellung eines Mikroventils, welches einen schichtweisen Aufbau verfolgt. Dabei wird eine Schicht zuerst auf eine andere Schicht aufgebracht, bevor die aufgebrachte Schicht von einer Seite her strukturiert und geätzt wird.

Aus der DE 10 2005 042 648.4 ist ein Verfahren zur Herstellung von kommunizierenden Hohlräumen bekannt. Dazu wird die Strukturierung eines Siliziumsubstrats von nur einer Waferseite her vorgeschlagen, was gegenüber Herstellungsverfahren, bei denen der Wafer von beiden Seiten her bearbeitet wird, deutliche Zeit- und somit Kostenvorteile mit sich bringt. Zur Ausbildung der kommunzierenden Hohlräume lehrt diese Druckschrift die Aufbringung und Strukturierung weiterer sogenannter Funktionsschichten in der Form von epitaktisch aufgewachsenen Silizium-Zusatzschichten, die mittels Epitaxie Oxidschichten, Lackmasken und entsprechenden Ätzverfahren hergestellt werden. Den Abschluss dieser mehrschichtigen Struktur bildet eine abdeckende Glasschicht mit darin ausgebildeten Zugangsöffnungen für die sogenannten "fluidischen Strukturen".

Die Basis dieser kommunizierenden Hohlräume bildet eine elektrochemisch hergestellte Kavität, die von einer Membran in der Form einer Siliziumschicht an der Oberfläche des Silizium- Substrats überdeckt wird. Die Form und Lage der Membran wird durch Umlagern des porösen Siliziums gestaltet und bildet als bewegliches Element zusammen mit Elementen der anderen Funktionsschichten ein dichtendes Element zur Steuerung eines Mikrofluides aus.

Als nachteilig wird hierbei die große Zahl an erforderlichen Verfahrensschritten zur Herstellung dieser kommunizierenden Hohlräume mit Ventil- bzw. Pumpfunktionen für mikrofluidische Anwendungen angesehen.

### Aufgabe und Vorteile der Erfindung

Der vorliegenden Erfindung liegt daher die Aufgabe zugrunde, den eingangs dargelegten Stand der Technik zu verbessern.

Diese Aufgabe wird durch die Merkmale der Ansprüche 1 und 13 gelöst. In den Unteransprüchen sind vorteilhafte und zweckmäßig Weiterbildungen der Erfindung angegeben.

Demnach betrifft die vorliegende Erfindung ein Verfahren zur Herstellung eines mikromechanischen Bauteiles zur Steuerung eines Fluidflusses, umfassend die Schritte:
- herstellen einer schwingungsfähigen Membrane an einer Oberfläche einer Trägerschicht durch ausbilden einer darunter liegenden Kavität von der gleichen Oberflächenseite her,
- überdecken der Trägerschicht mit einer Zwischenschicht,
- strukturieren der Zwischenschicht und
- überdecken der Zwischenschicht mit einer das mikromechanische Bauteil abschließenden Deckschicht.

Sie zeichnet sich dadurch aus, dass die Strukturierung der Zwischenschicht derart erfolgt, dass an der Membrane ein Dichtelement eines Fluidventils entsteht, welches eine in der Deckschicht ausgebildete Ventilöffnung verschließt und/oder umschließt.

Diese Vorgehensweise hat den Vorteil, dass zur Herstellung eines mikromechanischen Ventils lediglich zwei Schichten mittels eines oberflächenmikromechanischen Bearbeitungsverfahrens ohne die Notwendigkeit von Sonderprozessschritten zu bearbeiten sind. Die dritte Schicht, die sogenannten Deckschicht kann in einem separaten Bearbeitungsprozess vorbereitet und zur Komplettierung des Ventils auf die so vorbereitete Grund- und Zwischenschicht aufgebracht und mit diesen entsprechend ausgerichtet fest verbunden werden. Gegenüber dem bisher bekannten Stand der Technik kann somit eine Vielzahl an Prozessschritten, insbesondere Nicht-Standard-Prozessschritten eingespart werden, die zur Ausbildung bisher zusätzlich wegen von den Standards der Halbleitertechnik notwendiger weiterer Zwischenschichten erforderlich sind.

Die Strukturierung der Zwischenschicht kann dabei derart erfolgen, dass um das Dichtelement herum ein Hohlraum entsteht. Hierdurch kann einerseits ein Innenraum für das Ventil geschaffen werden und andererseits das Dichtelement selbst funktional strukturiert bzw. konturiert werden.

Weiter vorteilhaft wird vorgeschlagen, dass bei der Strukturierung der Zwischenschicht auch eine fluidleitende Durchgangsöffnung durch die Membran zur darunterliegenden Kavität erzeugt wird. Hierdurch ist z.B. ein Druckausgleich zwischen der vorzugsweise durch Umlagern von porösem Silizium unter der Membran erzeugten Kavität und dem darüberliegenden Hohlraum in der Zwischenschicht möglich. Dadurch kann die Membran einerseits frei schwingen, andererseits erweitert diese Verbindung das insgesamt vorhandene Innenvolumen des Ventils, was z.B. bei der Herstellung eines Einlassventils vorteilhaft sein kann.

Zur Herstellung eines Auslassventils kann es demgegenüber vorteilhaft sein, dass die Durchgangsöffnung in der Membrane so strukturiert wird, dass sie die unter der Membrane liegende Kavität mit der Ventilöffnung verbindet.

Damit ist ein Druckausgleich zwischen dem das mikromechanische Bauteil im Ventilöffnungsbereich umgebenden Außendruck und dem in der Kavität vorherrschenden Innendruck möglich.

Hierbei ist zu beachten, dass auch diese Kavität im Inneren des mikromechanischen Bauteils ausgebildet ist und die darüberliegende Membran durch Änderung des Außendrucks und der damit einhergehenden Krafteinwirkung auf deren Unterseite in ihrer Lage beeinflussbar ist.

Eine weitere Möglichkeit, die Membran in ihrer Lage zu verändern, besteht durch eine entsprechende Druckänderung an der gegenüberliegenden Membranseite, also der der Zwischenschicht und der Deckschicht zugewandten Seite. Hierzu ist eine Veränderung des Innendrucks im Hohlraum um das betreffende Dichtelement herum erforderlich, welcher durch die Membran fluiddichtend von der darunterliegenden Kavität getrennt ist. Eine solche Druckänderung kann beispielsweise durch eine Druckerhöhung in dem das Dichtelement umgebenden Hohlraum hervorgerufen werden. Bei ausreichend hoher Druckdifferenz zwischen dem Druck im Hohlraum um das Dichtelement und dem Außendruck, welcher auch im Inneren der unter der Membran ausgebildeten Kavität vorherrscht, kann die Membran soweit in den Innenraum der Kavität verdrängt werden, dass der Dichtsitz zwischen dem Dichtelement und einer Ventilausgangsöffnung fluidleitend geöffnet werden kann. Dadurch ist ein Ausströmen des im Hohlraum um das Dichtelement unter Überdruck stehenden Fluides möglich.

Um ein Anhaften eines Dichtelementes eines so aufgebauten Ventiles an der Unterseite der Deckschicht zu verhindern, welche z.B. eine vorgebohrte Glasplatte sein kann, kann zwischen dem Dichtelement und der Deckschicht eine Antihaftschicht aufgebracht sein. Die Antihaftschicht kann auf dem Silizium oder der Glasplatte oder auf beiden aufgebracht und strukturiert sein. Anstelle und/oder zusätzlich zu einer Haftschicht ist auch die Realisierung einer Antihaftfunktion durch eine entsprechende Oberflächenmodifikation eines oder auch beider Berührungsbereiche, Glas und/oder Silizium, möglich. Insbesondere vorteilhaft ist hierzu SiC, Si-Nitrid oder dergleichen geeignet. Dies kann sowohl bei einem Einlassals auch bei einem Auslassventil, vorzugsweise bei beiden, vorgesehen sein. Anodisches Bonden verbindet Silizium und Glas sehr fest. Falls die Deckschicht (Glas) mit anodischem Bonden aufgebracht wird, kann beispielsweise eine die elektrische Schicht wie z.B. Nitrid oder SiC (Siliziumcarbid) zuvor aufgebracht und strukturiert werden.

Um einen höheren Fertigungsgrad bei der Herstellung eines solchen mikromechanischen Bauteils zu erreichen, kann es im weiteren vorteilhaft sein, dass bei der Herstellung der ersten schwingungsfähigen Membrane mindestens eine weitere schwingungsfähige Membrane an der Oberfläche der Trägerschicht durch ausbilden einer darunter liegenden Kavität erzeugt wird.

So können beispielsweise zwei verschiedene Ventile nebeneinander auf einem Wafersegment hergestellt werden. Dies können entweder zwei verschiedene Einlass- oder zwei verschiedene Auslassventile sein, es können aber auch in einer besonders bevorzugten Ausführungsform ein Einlass- und ein Auslassventil sein.

Die Kombination eines Einlass- und eines Auslassventils bietet z.B. die Möglichkeit der Herstellung einer mikromechanischen Pumpe mittels eines derartigen oberflächenmikromechanischen (OMM) Bearbeitungsvorgangs einer Trägerschicht, z.B. in der Form eines Siliziumwafers. Hierzu wird es insbesondere als vorteilhaft angesehen, dass bei der Strukturierung der Zwischenschicht und/oder der Trägerschicht eine fluidleitende Verbindung zwischen dem um das erste Dichtelement ausgebildeten ersten Hohlraum und einem weiteren, um ein weiteres Dichtelement ausgebildeten Hohlraum erzeugt wird.

Diese fluidleitende Verbindung kann z.B. eine Pumpkammer einer entsprechend ausgebildeten mikromechanischen Pumpe sein, die die oben beschriebenen Hohlräume um die jeweiligen Dichtelemente fluidleitend miteinander verbindet.

Die Einflussnahme auf den Innendruck dieser fluidleitenden Verbindung, z.B. in der Form einer Pumpkammer, kann z.B. dadurch erfolgen, dass eine an die fluidleitende Verbindung und/oder an einen der beiden Hohlräume angrenzende dritte schwingungsfähige Membrane ausgebildet wird. Diese Membran kann dann durch ein geeignetes Mittel in seiner Lage das Volumen der Pumpkammer verändernd beeinflusst werden.

In einer ersten Ausführungsform könnte ein solches die Membran in ihrer Lage veränderndes Mittel ein Pneumatikantrieb sein. Dieser könnte sich beispielsweise dadurch auszeichnen, dass für eine von der dritten schwingungsfähigen Membrane abgeschlossene Kavität ein separater Fluidanschluss ausgebildet wird.

Durch diesen separaten Fluidanschluss kann die Membran so mit Über- oder Unterdruck beaufschlagt werden, dass die Pumpkammer in ihrem Volumen reduziert oder verringert wird. Bei einer Volumenvergrößerung entsteht ein Unterdruck in der Pumpkammer, so dass das damit verbundene Einlassventil öffnet und Fluid in die Pumpkammer einfließen kann. Bei Reduzierung des Pumpvolumens entsteht ein Überdruck, so dass ab einem bestimmten Differenzdruck zwischen diesem Überdruck dem im Auslassbereich des Auslassventils vorherrschenden Außendruck dieses Auslassventil zum Ablass des in der Pumpe befindlichen Fluids öffnet.

In einer weiteren Ausführungsform kann es vorgesehen sein, dass die mikromechanische Pumpe nicht durch einen Fluidantrieb betätigt wird, sondern durch ein anderes Mittel. Hierzu kann es beispielsweise vorgesehen sein, dass auf die dritte schwingungsfähige Membrane ein Element aufgebracht wird oder einwirkt, welches bei seiner Betätigung auf die Membrane eine Druck- und/oder Zugwirkung ausübt. Z.B. könnte dies ein piezoelektrischer Schwinger, ein Stößel oder ein Elektromagnet oder dergleichen sein.

Im Weiteren wird es als vorteilhaft angesehen, wenn die Strukturierung der gemeinsam ein Ventil bildenden Elemente, Membrane, Dichtelement, Antihaftschicht und Deckschicht, so erfolgt, dass im zusammengebauten Zustand des mikromechanischen Bauteiles, insbesondere einer mikromechanischen Pumpe, das Dichtelement unter einer Vorspannung die Ventilöffnung abdichtet. Hierdurch kann über die Vorspannung des jeweiligen Ventils direkt Einfluss auf die zur Öffnung des betreffenden Ventils erforderliche Druckdifferenz auf den beiden Seiten des Ventil-Dichtsitzes bzw. der Ventilklappe genommen werden. Somit ist es möglich für verschiedene Anwendungsfälle Pumpen mit jeweils entsprechend angepassten Pumpparametern herzustellen.

Neben dem Herstellungsverfahren betrifft die vorliegende Erfindung auch ein entsprechendes mikromechanisches Bauteil zur Steuerung eines Fluidflusses, mit einer Trägerschicht, einer strukturierten Zwischenschicht, und einer das mikromechanische Bauteil abschließenden Deckschicht, wobei an der der Zwischenschicht zugewandten Oberfläche der Trägerschicht eine schwingungsfähige Membrane und eine darunter liegende Kavität durch bearbeiten von der gleichen Seite her ausgebildet sind und zusammen mit einem Dichtelement und einer Ventilöffnung ein Ventil ausbilden. Dieses Bauteil zeichnet sich dadurch aus, dass Ventilspannmittel für ein Einlassventil und/oder für ein Auslassventil, von außen betrachtet, hinter dem Ventil-Dichtsitz im Inneren des mikromechanischen Bauteils angeordnet sind. Dieser Aufbau hat den bereits oben zum Verfahren dargelegten Vorteil, dass zusätzlich zur Trägerschicht nur eine einzige Zwischenschicht für die Herstellung erforderlich ist.

Besonders vorteilhaft kann es hierbei sein, dass die Ventilspannmittel für das Einlassventil und/oder die Ventilspannmittel für das Auslassventil zumindest Teile von dessen Membrane umfassen. Ein solches Teil der Membran kann beispielsweise ein Membranarm und/oder ein diesen Membranarm mit einem weiteren Membranarm verbindender Membranamboss sein. Auf einem solchen Membranamboss kann beispielsweise das oben beschriebene Dichtelement durch die Befestigung an,der Membran schwingfähig und damit das Ventil in seiner Funktion betätigend aufgesetzt sein.

Weiterhin kann es vorteilhaft sein, wenn die Ventilspannmittel für das Einlassventil und/oder die Ventilspannmittel für das Auslassventil ein Dichtelement und/oder eine Antihaftschicht und/oder eine fluidleitende Verbindung zwischen der Kavität des Auslassventils und der Außenseite des mikromechanischen Bauteils umfassen. Weiterhin kann es günstig sein, dass die Ventilöffnung des Einlassventils und/oder die Ventilöffnung des Auslassventils in der Deckschicht ausgebildet ist bzw. sind. Die Vorteile derartiger Ausführungsformen wurden bereits oben bei der Beschreibung der entsprechenden Verfahrensschritte dargelegt.

### Ausführungsbeispiel

Ein Ausführungsbeispiel wird anhand der Zeichnungen und der nachfolgend darauf bezugnehmenden Beschreibung näher erläutert. Es zeigen:
- Figuren 1 bis 4: jeweils einen Querschnitt durch eine Trägerschicht eines mikromechanischen Bauteils zur Steuerung eines Fluidflusses in verschiedenen Bearbeitungsschritten für eine erste Ausführungsform,
- Figuren 3a und 4a: jeweils die Draufsicht auf die Figuren 3 und 4,
- Figuren 5 bis 6a: die Schnittdarstellung und die Draufsicht auf eine gegenüber der Ausführung in den Figuren 3 bis 4a abgewandelte Ausführungsform, wiederum in zwei unterschiedlichen Prozessschritten,
- Figur 7 bis 8a: zwei weitere Bauelemente eines mikromechanischen Bauteils, jeweils in Schnittansicht und Draufsicht,
- Figur 9 und 10: zwei Ausführungsformen mikromechanischer Bauteile in der Form mikromechanischer Pumpen.

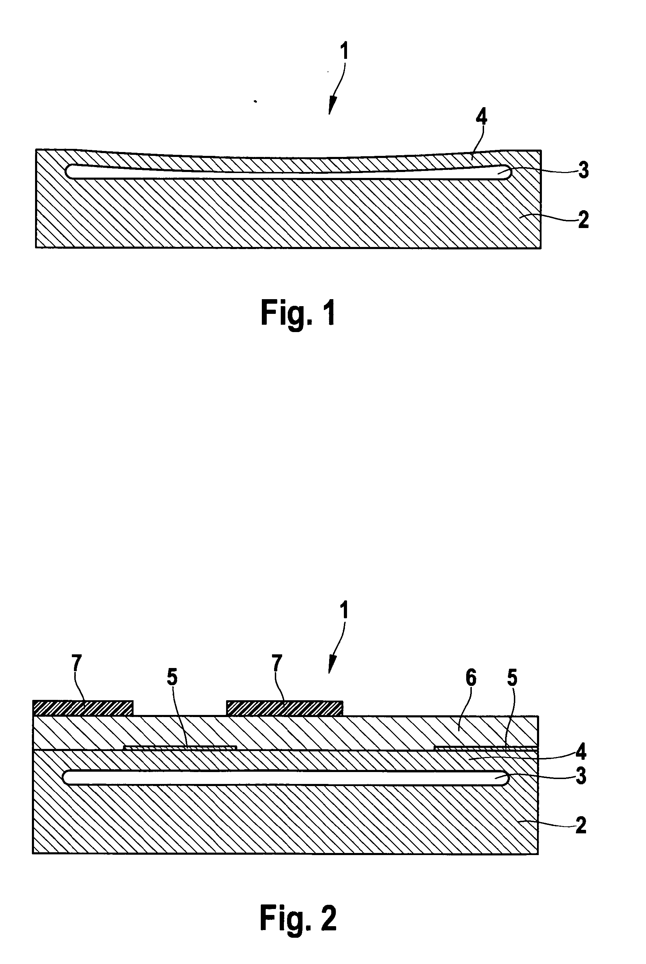

Im Detail zeigt die Figur 1 einen Schnitt durch eine Trägerschicht 2, insbesondere in der Form eines Siliziumwafers, bei welchem durch Umlagern von porösem Silizium eine Kaverne 3 und darüber eine Membran 4 erzeugt wurden.

Die Figur 2 zeigt wiederum die Trägerschicht 2 entsprechend der Figur 1 mit einer darauf aufgebrachten, strukturierten Zwischenoxidschicht 5, einer darüberliegenden Zwischenschicht 6 und einer darauf, wiederum strukturiert aufgebrachten Lackschicht 7.

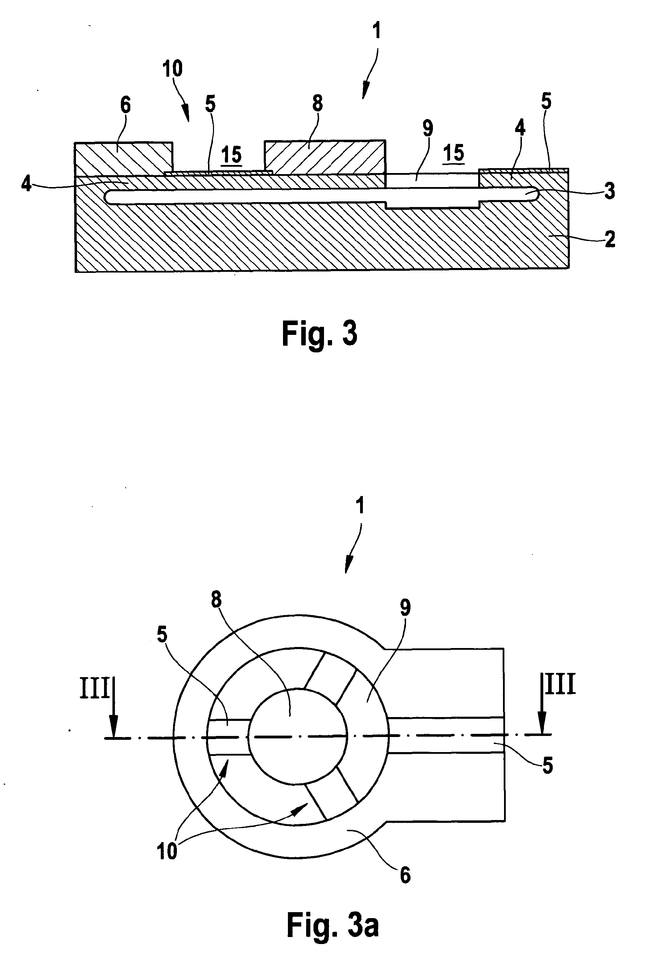

Die Strukturierung der Zwischenoxidschicht 5 dient als Grundlage zur reproduzierbaren Strukturierung der darunter liegenden Trägerschicht 2 bei einem nachfolgenden Ätzvorgang, wie dies z.B. aus den Figuren 3 bis 6 ersichtlich ist.

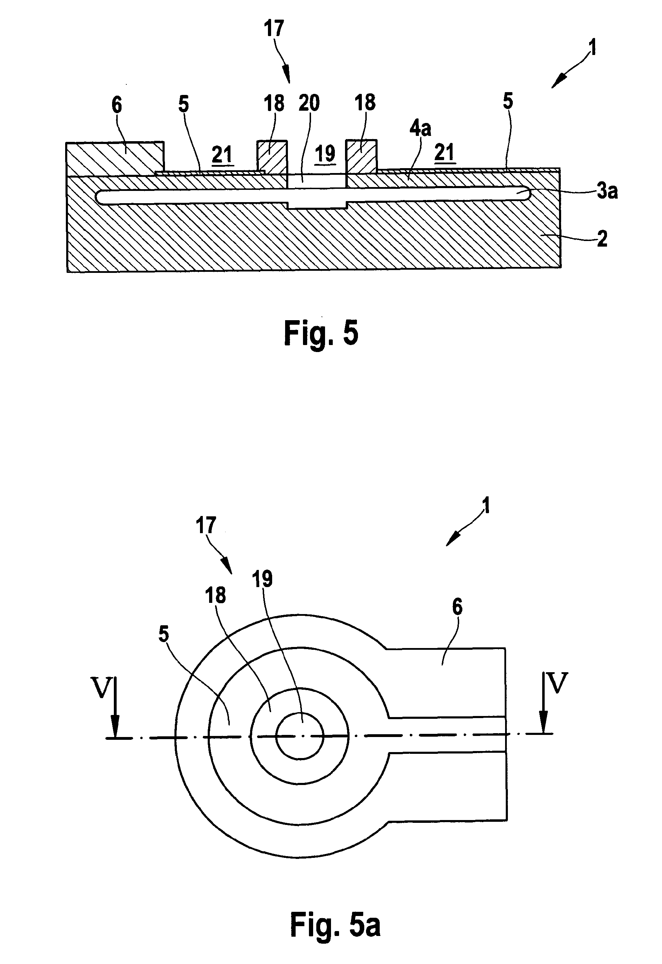

Die Strukturierung der Lackschicht entspricht der üblichen Maskierung bei einer Siliziumprozessierung mittels eines nachfolgenden Ätzvorgangs. Die von der Lackmaske abgedeckten Schichtbereiche bleiben stehen, die übrigen Schichtbereiche werden durch den Ätzvorgang entfernt. Der Ätzvorgang kann aber auch trotz zeitlicher Fortdauer lokal in seiner Wirkung begrenzt werden, z.B. durch die ätzresistente Zwischenoxidschicht 5, wie dies z.B. aus den Darstellungen der weiteren Prozessschritte in den Figuren 3, 3a, 5 und 5a ersichtlich ist.

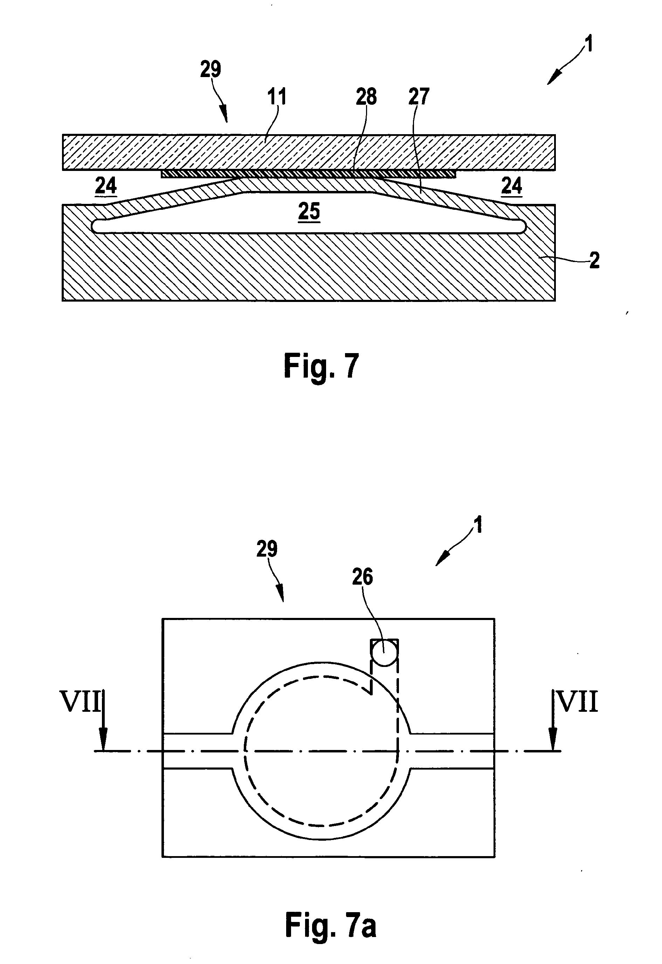

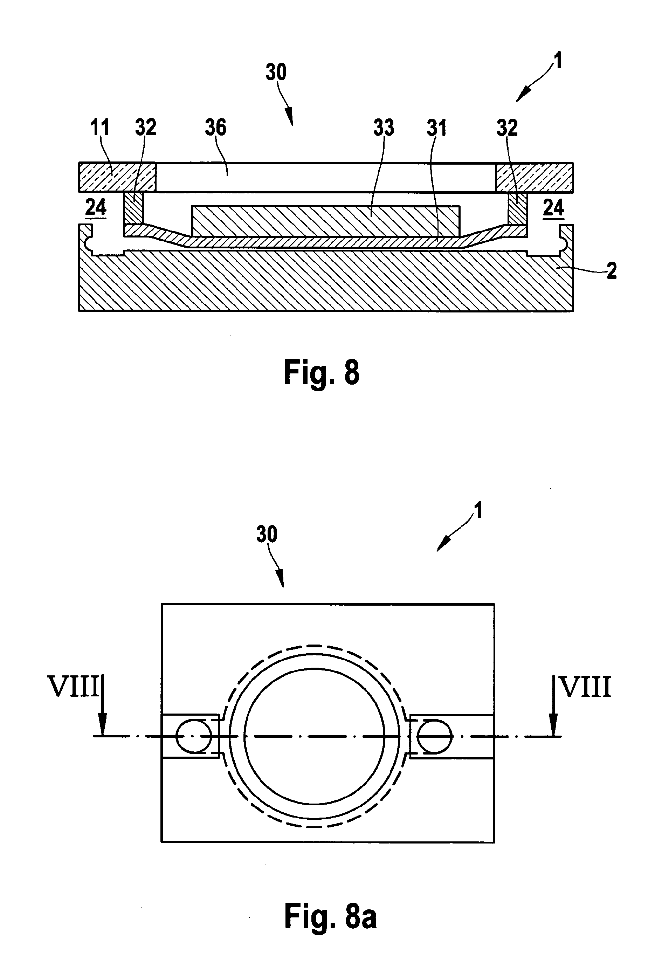

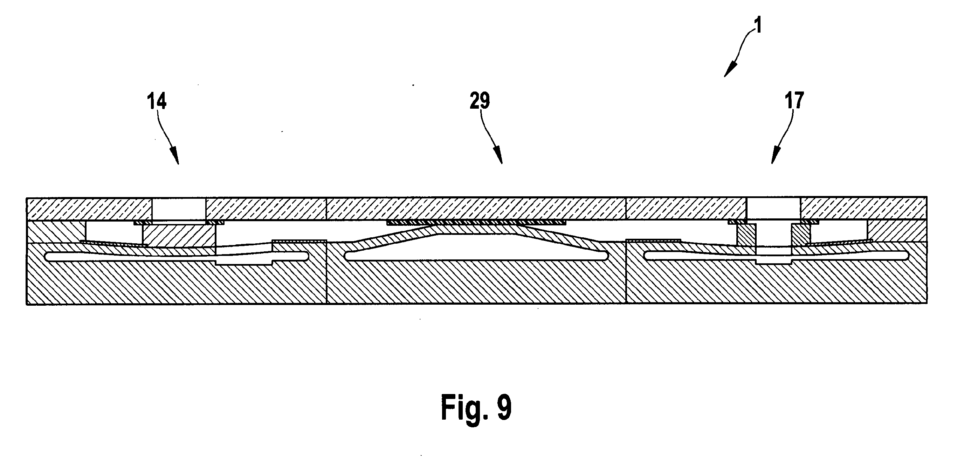

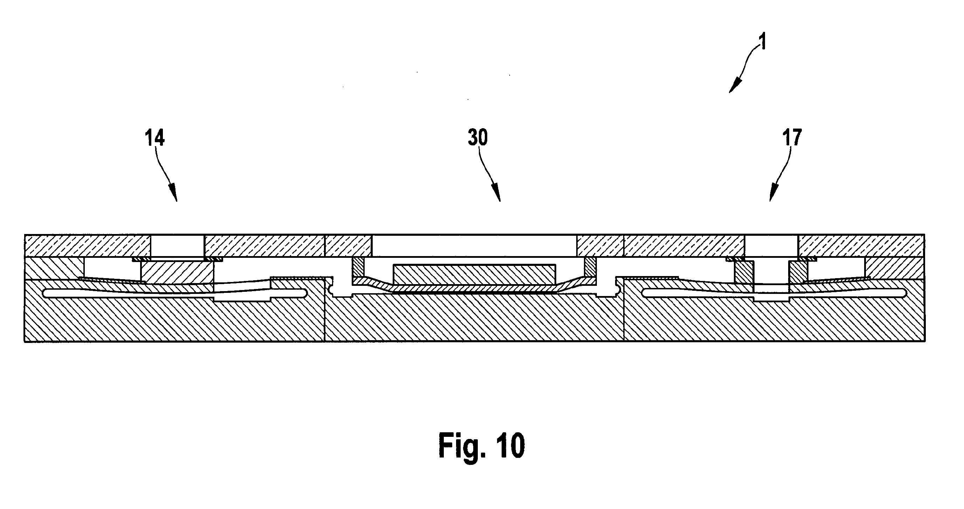

Durch die Bearbeitung des Siliziumwafers mittels oberflächenmikromechanischer Technologie (OMM-Technologie) entsteht so schrittweise das mikromechanische Bauteil 1 zur Steuerung eines Fluidflusses. Die Darstellungen in den Figuren 3 bis 4a zeigen hierbei zwei Prozessschritte in Schnittansicht und Draufsicht zur Herstellung eines Einlassventils, und die Figuren 5 bis 6a die entsprechenden Darstellungen zur Herstellung eines Auslassventils. Zusammen mit einem weiteren Element, wie z.B. in den Figuren 7, 7a bzw. 8, 8a dargestellt, bilden sie nach Abschluss des Herstellungsprozesses eine mikromechanische Pumpe, die nach Darstellung der Figur 9 z.B. einen pneumatischen Membranantrieb aufweist, und in der Darstellung nach Figur 10 einen zusätzlichen Aktuator, z.B. in der Form eines Piezoelementes.

Die Figur 3 zeigt das mikromechanische Bauteil 1 in einem der Darstellung in der Figur 2 nachfolgenden Prozessschritt, nachdem sowohl die Epitaxischicht 6 als auch die Membran 4 in einem Trenchschritt geätzt worden sind. Die Zwischenoxidschicht 5 diente dabei als selektiver Ätzstopp. Nur dort, wo diese zuvor entfernt worden ist, wurde auch die darunterliegende und die Membran ausbildende Siliziumschicht geätzt.

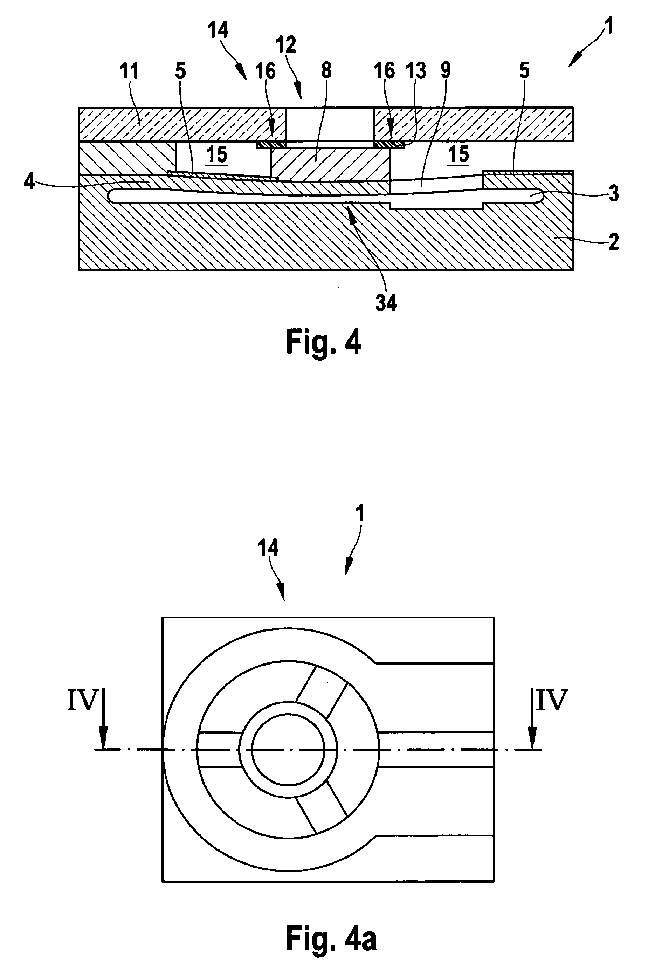

In der Draufsicht sind in der Figur 3a drei sektorförmige Durchgangsöffnungen 9 zu erkennen, zwischen denen jeweils ein Membranarm 10 als nicht weggeätztes Membranteil erkennbar ist. In der Mitte ist das zylinderförmige Dichtelement 8 dargestellt, welches die Ventilöffnung 12 in der nachfolgend noch aufzubringenden Deckschicht 11 verschließt (Figur 4).

Um das Dichtelement 8 herum ist durch diesen Ätzvorgang ein Hohlraum 15 entstanden, welcher über die Durchgangsöffnung 9 in der Membran 4 mit der unter der Membran 4 angeordneten Kaverne 3 kommunizieren kann. Die Funktionsweise dieses in der Figur 4 dargestellten Einlassventils ist vergleichbar mit der von passiven, hydrostatischen Ventilen. Sobald der Druck außen höher ist als innen, wird die Ventilklappe in der Form des auf der schwingungsfähigen Membran 4 aufliegenden Dichtelementes 8 nach unten gedrückt und das flüssige oder gasförmige Medium kann in den Innenraum 15 des Ventils einströmen. Wenn der Druck außen kleiner ist als innen, oder gleich, wird die Ventilklappe wieder gegen die Deckschicht 11 gedrückt, die z.B. eine Glasplatte sein kann.

Um ein Anhaften der Ventilklappe 8 im Dichtbereich 16 zwischen dem Dichtelement 8 und der Deckschicht 11 zu verhindern, kann in diesem Bereich zusätzlich eine Antihaftschicht 13 aufgebracht werden. Die Antihaftschicht kann sowohl auf dem Glas als auch alternativ auf der Si-Oberfläche aufgebracht sein, oder auf beiden und entsprechend strukturiert sein.

Durch die Schichterhöhung, die aus dem Auftrag der Antihaftschicht hervorgeht, wird die Ventilklappe, wie in Figur 4 gezeigt, leicht vorgespannt. Durch Variierung der für die Vorspannung verantwortlichen Parameter, wie z.B. Geometrie bzw. Elastizität der Membran, ist der Arbeitsbereich des Einlassventils hinsichtlich des für die Freischaltung des Ventils erforderlichen Differentialdrucks beeinflussbar. Somit sind z.B. Einlassventile realisierbar, die auch bei leicht höherem Außendruck noch geschlossen halten.

Durch das hier vorgeschlagene Herstellungsverfahren kann somit ein mikromechanisches Bauteil zur Steuerung eines Fluidflusses, wie das oben beschriebene Einlassventil, allein durch Aufbringen und Strukturieren einer einzigen Zwischenschicht mit nachfolgendem Abschluss durch eine Deckplatte realisiert werden. Dies bedeutet gegenüber dem eingangs dargelegten, bekannten Stand der Technik eine massive Reduzierung in der Zahl der für die Herstellung erforderlichen Prozessschritte und eine Beschränkung auf Standardprozesse der Mikrosystemtechnik, insbesondere der Halbleiterprozesstechnik. Hierdurch ist sowohl der zeitliche als auch der finanziell erforderliche Aufwand für die Herstellung eines solchen Elementes deutlich reduziert.

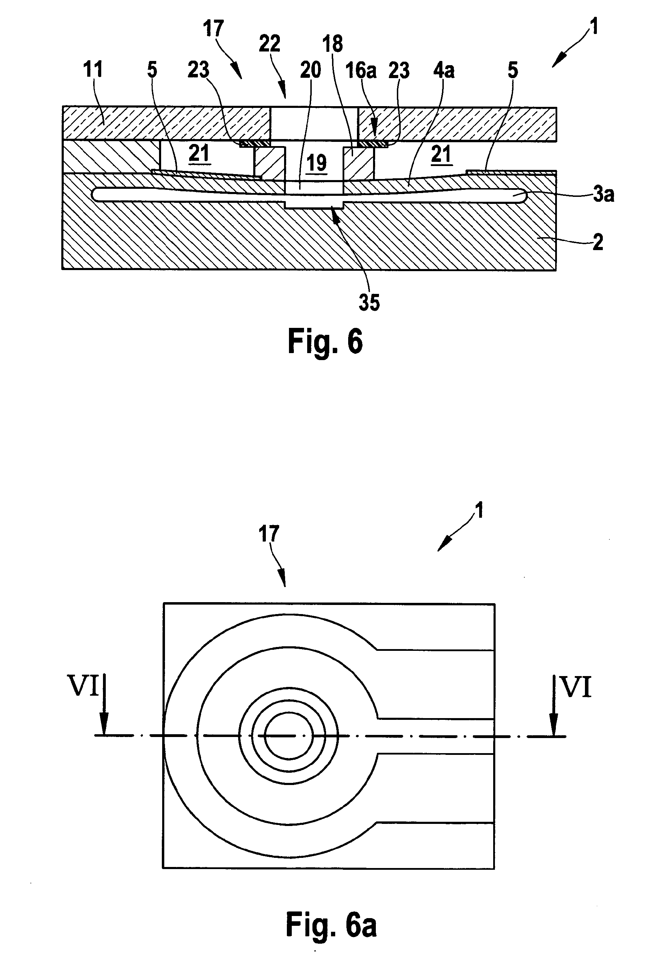

Die Figuren 5 und 6 sowie 5a und 6a zeigen analog zu den Abbildungen in den Figuren 3 bis 4a zwei Prozessschritte zur Herstellung eines mikromechanischen Auslassventils 17.

Zur Erstellung der Struktur dieses Auslassventils wurde die Lackmaske zur Vorbereitung des Ätzvorgangs abweichend von der Darstellung der Figur 2 so gestaltet, dass im Dichtelement 18 zentral ein Durchlass 19 ausgebildet wird. Gleich ist die Ausbildung eines Hohlraums 21 um das Dichtelement 18 herum. Wiederum abweichend ist die Strukturierung der auf der Oberfläche der Trägerschicht aufgetragenen Zwischenoxidschicht 5. Diese ist, wie in der Figur 5a ersichtlich, lediglich zentral in der Mitte unterhalb des Durchlasses 19 oberhalb der Membran 4a ausgespart. Dadurch entsteht während des Ätzprozesses eine Durchgangsöffnung 20 zur darunterliegenden Kaverne 3a.

Das fertige mikromechanische Auslassventil ist im Querschnitt in der Figur 6 dargestellt und in der Draufsicht in der Figur 6a. Die Schnittlinien in den verschiedenen Draufsichtsdarstellungen III/III bis VIII/VIII zeigen jeweils die Lage der dazugehörigen Schnittdarstellung in den betreffenden Figuren.

Die Kaverne 3a des Auslassventils 17 aus der Figur 6 kommuniziert somit fluidleitend mit der Außenumgebung des mikromechanischen Bauteils 1 über die Verbindung Durchgangsöffnung 20, Durchlass 19 und Ventilöffnung 22. Die Ventilöffnung 22 ist hier, entsprechend der Ausführungsform des Einlassventils 14 aus den Figuren 3 bis 4a, in der abschließenden Deckschicht 11 angeordnet. Diese Ventilöffnungen 12 und 22 werden in einem vorbereiteten Arbeitsschritt in der als Deckschicht 11 fungierenden Glasplatte ausgebildet. Ein wesentlicher Vorteil derartig aufgebauter Ventile 14, 17 liegt in der Anordnung der Ventilvorspannmittel 34, 35 im Inneren des mikromechanischen Bauteils, hinter dem Ventil-Dichtsitz 16 bzw. 16a.

Zusätzlich ist zur Haftvermeidung zwischen dem Dichtelement 18 und der Glasplatte 11 eine Antihaftschicht 23 im Dichtungsbereich 16a aufgebracht. Diese Antihaftschicht 23 wird, wie die Antihaftschicht 13 im Dichtungsbereich 16, angebracht, entweder auf den betreffenden Si-Oberflächen oder der Glasoberfläche oder sowohl auf Si als auch auf dem Glas und entsprechend strukturiert. Durch die geometrische Ausdehnung dieser Antihaftschicht 23 kann die Ventilklappe dieses Auslassventils 17 in Entsprechung zum Einlassventil 14 vorgespannt werden.

Zur Betätigung des Einlassventils 14 bzw. des Auslassventils 17, entsprechend der in den Figuren 9 und 10 dargestellten mikromechanischen Pumpen, ist im mikromechanischen Bauteil 1 noch eine Pumpkammer 24 erforderlich, deren Druck durch ein entsprechendes Mittel beeinflussbar ist. In den Figuren 7 und 8 sind hierzu zwei unterschiedliches Ausführungsformen dargestellt.

In der Figur 7 ist ein pneumatischer Pumpantrieb gezeigt, bei dem eine Kaverne 25 entsprechend den Kavernen 3 des Einlassventils 14 bzw. des Auslassventils 17 in der Trägerschicht 2 bei der Herstellung des mikromechanischen Bauteils ausgebildet wird. Diese Kaverne 25 ist von der Pumpkammer 24 fluidleitend getrennt und weist einen eigenen Fluidanschluss 26 auf, wie in der Figur 7a dargestellt. Dieser Anschluss 26 dient zur Beaufschlagung der Kaverne 25, um die darüberliegende Membran 27 entsprechend der Darstellung in der Figur 7 nach oben zu drücken und damit das Volumen der Pumpkammer 24 zu verringern. Durch diese Volumenverringerung steigt der Druck im Inneren der Pumpkammer 24 an, so dass das Auslassventil öffnen kann. Die Antihaftschicht 28 verhindert wiederum, entsprechend den Ausführungen zum Einlass- und Auslassventil, ein Anhaften der Membran 27 an der Deckschicht 11.

Nach Ablassen des Überdrucks in der Kaverne 25 senkt sich die Membran 27 ab, so dass zwischen der Pumpkammer 24 und der Ventilöffnung 12 des Einlassventils ein Differenzialdruck entstehen kann, der das Einlassventil öffnet. Dieser Ansaugvorgang der mikromechanischen Pumpe kann durch Aufprägung eines Unterdrucks in der Kaverne 25 noch unterstützt werden. In diesem Fall würde sich die Membran 27 in Richtung zum Boden der Kaverne 25 hin durchbiegen und damit das Volumen der Pumpkammer 24 vergrößern. Das Pumpteil 29 ist somit das dritte Element des mikromechanischen Bauteils 1, welche gemeinsam durch die oben beschriebenen Herstellungsprozesse, aufbauend auf der Trägerschicht 2, hergestellt werden kann.

Die Figur 8 zeigt eine gegenüber der Figur 7 abgewandelte Ausführungsform eines Pumpteils 30, bei dem eine Membran 31 mittels eines Stütz- und Dichtelementes 32 an der Deckschicht 11 befestigt ist. Die Pumpkammer 24 ist hierbei ebenfalls nach außen hin geschlossen, so dass durch Absenken der Membran 31 wiederum eine Reduzierung des Volumens in der Pumpkammer 24 erfolgt.

Das Absenken der Membran 31 erfolgt durch Betätigen des Aktuators 33, z.B. in der Form eines Piezoelementes oder Piezostößels oder eines magnetischen Ankers, der von außen auf die Membran einwirkt. Je nach Ausführungsform ist auch hier ein Anheben der Membran 31 über eine vorzugsweise waagrechte Normalstellung hinaus durch Aufbringen einer Zugwirkung auf die Membran 31 möglich. Hierdurch wird in Entsprechung zum pneumatischen oder gegebenenfalls hydraulischen Ventilantrieb die Unterstützung zur Erzeugung eines Unterdrucks gegenüber dem Einlassventil bewirkt. Bevorzugt ist die Rückstellung der Membran 31 so wie auch der Membran 27 jedoch durch die ihnen innenwohnenden Rückstellkräfte in ihre Ruhelage vorgesehen.

Die Figuren 9 und 10 zeigen die beiden beispielhaften Ausführungsformen eines mikromechanischen Bauteils 1 in der Form einer mikromechanischen Pumpe mit den einzelnen Elementen Einlassventil 14, Auslassventil 17 und Pumpteil 29 bzw. 30 in aktiviertem Zustand bei reduziertem Pumpkammervolumen 24.

## Patentansprüche

1. Verfahren zur Herstellung eines mikromechanischen Bauteiles (1) zur Steuerung eines Fluidflusses, umfassend die Schritte:
- herstellen einer schwingungsfähigen Membran (4, 4a) an einer Oberfläche (2a) einer Trägerschicht (2) durch ausbilden einer darunter liegenden Kavität (3, 3a) von der gleichen Oberflächenseite her,
- überdecken der Trägerschicht (2) mit einer Zwischenschicht (6),
- strukturieren der Zwischenschicht (6 ) und
- überdecken der Zwischenschicht (6) mit einer das mikromechanische Bauteil (1) abschließenden Deckschicht (11),
**dadurch gekennzeichnet, dass** die Strukturierung der Zwischenschicht (6) derart erfolgt, dass an der Membran (4, 4a) ein Dichtelement (8, 18) eines Fluidventils (14, 17) entsteht, welches eine in der Deckschicht (11) ausgebildete Ventilöffnung (12, 22) verschließt und/oder umschließt.

2. Verfahren nach Anspruch 1, **dadurch gekennzeichnet, dass** die Strukturierung der Zwischenschicht (6) derart erfolgt, dass um das Dichtelement (8, 18) herum ein Hohlraum (15, 21) entsteht.

3. Verfahren nach Anspruch 1 oder 2, **dadurch gekennzeichnet, dass** bei der Strukturierung der Zwischenschicht (6) eine fluidleitende Durchgangsöffnung (9, 20) durch die Membrane (4, 4a) zur darunter liegenden Kavität (3, 3a) erzeugt wird.

4. Verfahren nach einem der vorangehenden Ansprüche, **dadurch gekennzeichnet, dass** die erste Durchgangsöffnung (9) in der ersten Membrane (4) so strukturiert wird, dass sie die unter der Membrane (4) liegende Kavität (3) mit dem das Dichtelement (8) umgebenden Hohlraum (15) verbindet.

5. Verfahren nach einem der vorangehenden Ansprüche, **dadurch gekennzeichnet, dass** die zweite Durchgangsöffnung (20) in der zweiten Membrane (4a) so strukturiert wird, dass sie die unter der Membrane (4a) liegende Kavität (3a) mit der Ventilöffnung (22) verbindet.

6. Verfahren nach einem der vorangehenden Ansprüche, **dadurch gekennzeichnet, dass** im Dichtungsbereich (16, 16a) zwischen der Deckschicht (11) und dem Dichtelement (8, 18) des Fluidventils (14, 17) eine Antihaftschicht (13, 23) aufgebracht wird oder eine Antihaftfunktionalität realisiert wird.

7. Verfahren nach einem der vorangehenden Ansprüche, **dadurch gekennzeichnet, dass** die Antihaftbeschichtung auf dem Glas und/oder auf dem Silizium aufgebracht ist.

8. Verfahren nach einem der vorangehenden Ansprüche, **dadurch gekennzeichnet, dass** die Antihaftfunktion auf dem Glas und/oder auf dem Silizium aufgebracht ist.

9. Verfahren nach einem der vorangehenden Ansprüche, **dadurch gekennzeichnet, dass** die Antihaftschicht aus Silizium besteht.

10. Verfahren nach einem der vorangehenden Ansprüche, **dadurch gekennzeichnet, dass** die Antihaftschicht ein Silizium-Nitrid ist.

11. Verfahren nach einem der vorangehenden Ansprüche, **dadurch gekennzeichnet, dass** bei der Herstellung der ersten schwingungsfähigen Membran (4) mindestens eine weitere schwingungsfähige Membran (4a) an der Oberfläche (2a) der Trägerschicht (2) durch ausbilden einer darunter liegenden Kavität (3a) erzeugt wird.

12. Verfahren nach einem der vorangehenden Ansprüche, **dadurch gekennzeichnet, dass** bei der Strukturierung der Zwischenschicht (6) und/oder der Trägerschicht (2) eine fluidleitende Verbindung (24) zwischen dem um das erste Dichtelement (8) ausgebildeten ersten Hohlraum (15) und einem weiteren, um ein weiteres Dichtelement (18) ausgebildeten Hohlraum (21) erzeugt wird.

13. Verfahren nach einem der vorangehenden Ansprüche, **dadurch gekennzeichnet, dass** eine an die fluidleitende Verbindung (24) und/oder einen der beiden Hohlräume (15, 21) angrenzende dritte schwingungsfähige Membrane (27, 31) ausgebildet wird.

14. Verfahren nach einem der vorangehenden Ansprüche, **dadurch gekennzeichnet, dass** für eine von der dritten schwingungsfähigen Membrane (27) abgeschlossene Kavität(25) ein separater Fluidanschluss (26) ausgebildet wird.

15. Verfahren nach einem der vorangehenden Ansprüche, **dadurch gekennzeichnet, dass** auf die dritte schwingungsfähige Membrane (31) ein Element (33) aufgebracht wird, welches bei seiner Betätigung auf die Membrane (31) eine Druck- und/oder Zugwirkung ausübt.

16. Verfahren nach einem der vorangehenden Ansprüche, **dadurch gekennzeichnet, dass** die Strukturierung der gemeinsam ein Ventil (14, 17) bildenden Elemente, Membrane (4, 4a), Dichtelement (8, 18), Antihaftschicht (16, 16a) und Deckschicht (11), so erfolgt, dass im zusammengebauten Zustand des mikromechanischen Bauteiles (1) das Dichtelement (8, 18) unter einer Vorspannung die Ventilöffnung (12, 22) abdichtet.

17. Mikromechanisches Bauteil (1) zur Steuerung eines Fluidflusses, mit einer Trägerschicht (2), einer strukturierten Zwischenschicht (6) und einer das mikromechanische Bauteil (1) abschließenden Deckschicht (11), wobei an der der Zwischenschicht (6) zugewandten Oberfläche der Trägerschicht (2) eine schwingungsfähige Membrane (4, 4a) und eine darunter liegende Kavität (3, 3a) durch bearbeiten von der gleichen Seite her ausgebildet sind, und zusammen mit einem Dichtelement (8, 18) und einer Ventilöffnung (12, 22) ein Ventil (14, 17) ausbilden, **dadurch gekennzeichnet, dass** Ventilspannmittel (34, 35) für ein Einlassventil (14) und/oder für ein Auslassventil (17), von außen betrachtet, hinter dem Ventil-Dichtsitz (16, 16a) im Inneren des mikromechanischen Bauteils (1) angeordnet sind.

18. Mikromechanisches Bauteil (1) nach Anspruch 17, **dadurch gekennzeichnet, dass** die Ventilspannmittel (34) für das Einlassventil (14) und/oder die Ventilspannmittel (35) für das Auslassventil (17) zumindest Teile von dessen Membrane (4) bzw.(4a) umfassen.

19. Mikromechanisches Bauteil (1) nach Anspruch 17 oder 18, **dadurch gekennzeichnet, dass** die Ventilspannmittel (34) für das Einlassventil (14) und/oder die Ventilspannmittel (35) für das Auslassventil (17) ein Dichtelement (8) bzw. (18) und/oder eine Antihaftschicht (13) bzw. (23) umfassen.

20. Mikromechanisches Bauteil nach einem der vorangehenden Ansprüche 17 bis 19, **dadurch gekennzeichnet, dass** die Antihaftbeschichtung auf dem Glas und/oder auf dem Silizium aufgebracht ist.

21. Mikromechanisches Bauteil nach einem der vorangehenden Ansprüche 17 bis 20, **dadurch gekennzeichnet, dass** die Antihaftfunktion auf dem Glas und/oder auf dem Silizium aufgebracht ist.

22. Mikromechanisches Bauteil nach einem der vorangehenden Ansprüche 17 bis 21, **dadurch gekennzeichnet, dass** die Antihaftschicht aus Silizium besteht.

23. Mikromechanisches Bauteil nach einem der vorangehenden Ansprüche 17 bis 22, **dadurch gekennzeichnet, dass** die Antihaftschicht ein Silizium-Nitrid ist.

24. Mikromechanisches Bauteil (1) nach einem der Ansprüche 17 bis 23, **dadurch gekennzeichnet, dass** eine fluidleitende Verbindung (19, 20, 22) zwischen der Kavität (3a) des Auslassventils (17) und der Außenseite des mikromechanisches Bauteil (1) vorgesehen ist.

25. Mikromechanisches Bauteil (1) nach einem der Ansprüche 17 bis 24, **dadurch gekennzeichnet, dass** die Ventilöffnung (12) des Einlassventils (14) und/oder die Ventilöffnung (22) des Auslassventils (17) in der Deckschicht (11) ausgebildet ist bzw. sind.

## Claims

1. Method of producing a micromechanical component (1) for controlling a fluid flow, comprising the steps of:
- producing an oscillatory membrane (4, 4a) on a surface (2a) of a carrier layer (2) by forming an underlying cavity (3, 3a) from the same side of the surface,
- covering over the carrier layer (2) with an intermediate layer (6),
- structuring the intermediate layer (6) and
- covering over the intermediate layer (6) with a top layer (11), closing off the micromechanical component (1),
**characterized in that** the structuring of the intermediate layer (6) is performed by creating on the membrane (4, 4a) a sealing element (8, 18) of a fluid valve (14, 17) which closes and/or encloses a valve opening (12, 22) formed in the top layer (11).

2. Method according to Claim 1, **characterized in that** the structuring of the intermediate layer (6) is performed by creating a hollow space (15, 21) around the sealing element (8, 18).

3. Method according to Claim 1 or 2, **characterized in that**, in the structuring of the intermediate layer (6), a fluid-conducting through-opening (9, 20) is produced through the membranes (4, 4a) to the underlying cavity (3, 3a).

4. Method according to one of the preceding claims, **characterized in that** the first through-opening (9) is structured in the first membrane (4) such that it connects the cavity (3) lying under the membrane (4) to the hollow space (15) surrounding the sealing element (8).

5. Method according to one of the preceding claims, **characterized in that** the second through-opening (20) is structured in the second membrane (4a) such that it connects the cavity (3a) lying under the membrane (4a) to the valve opening (22).

6. Method according to one of the preceding claims, **characterized in that** an anti-adhesive layer (13, 23) is applied or an anti-adhesive functionality is realized in the sealing region (16, 16a) between the top layer (11) and the sealing element (8, 18) of the fluid valve (14, 17).

7. Method according to one of the preceding claims, **characterized in that** the anti-adhesive coating is applied on the glass and/or on the silicon.

8. Method according to one of the preceding claims, **characterized in that** the anti-adhesive function is applied on the glass and/or on the silicon.

9. Method according to one of the preceding claims, **characterized in that** the anti-adhesive layer consists of silicon.

10. Method according to one of the preceding claims, **characterized in that** the anti-adhesive layer is a silicon nitride.

11. Method according to one of the preceding claims, **characterized in that**, in the production of the first oscillatory membrane (4), at least one further oscillatory membrane (4a) is produced on the surface (2a) of the carrier layer (2) by forming an underlying cavity (3a).

12. Method according to one of the preceding claims, **characterized in that**, in the structuring of the intermediate layer (6) and/or the carrier layer (2), a fluid-conducting connection (24) is produced between the first hollow space (15), formed around the first sealing element (8), and a further hollow space (21), formed around a further sealing element (18).

13. Method according to one of the preceding claims, **characterized in that** a third oscillatory membrane (27, 31), adjacent to the fluid-conducting connection (24) and/or one of the two hollow spaces (15, 21), is formed.

14. Method according to one of the preceding claims, **characterized in that** a separate fluid connection (26) is formed for a cavity (25) closed off by the third oscillatory membrane (27).

15. Method according to one of the preceding claims, **characterized in that** an element (33) which when actuated exerts a compressive and/or tensile effect on the membrane (31) is applied to the third oscillatory membrane (31).

16. Method according to one of the preceding claims, **characterized in that** the structuring of the elements together forming a valve (14, 17), the membranes (4, 4a), the sealing element (8, 18), the anti-adhesive layer (16, 16a) and the top layer (11), is performed such that, in the assembled state of the micromechanical component (1), the sealing element (8, 18) seals off the valve opening (12, 22) under a pretension.

17. Micromechanical component (1) for controlling a fluid flow, comprising a carrier layer (2), a structured intermediate layer (6) and a top layer (11), closing off the micromechanical component (1), an oscillatory membrane (4, 4a) and an underlying cavity (3, 3a) being formed on the surface of the carrier layer (2) that is facing the intermediate layer (6) by machining from the same side, and together with a sealing element (8, 18) and a valve opening (12, 22) forming a valve (14, 17), **characterized in that** valve tensioning means (34, 35) for an inlet valve (14) and/or for an outlet valve (17) are arranged, as viewed from the outside, behind the valve sealing seat (16, 16a) inside the micromechanical component (1).

18. Micromechanical component (1) according to Claim 17, **characterized in that** the valve tensioning means (34) for the inlet valve (14) and/or the valve tensioning means (35) for the outlet valve (17) comprise at least parts of the membranes (4) and (4a), respectively, thereof.

19. Micromechanical component (1) according to Claim 17 or 18, **characterized in that** the valve tensioning means (34) for the inlet valve (14) and/or the valve tensioning means (35) for the outlet valve (17) comprise a sealing element (8) and (18), respectively, and/or an anti-adhesive layer (13) and (23), respectively.

20. Micromechanical component according to one of the preceding Claims 17 to 19, **characterized in that** the anti-adhesive coating is applied on the glass and/or on the silicon.

21. Micromechanical component according to one of the preceding Claims 17 to 20, **characterized in that** the anti-adhesive function is applied on the glass and/or on the silicon.

22. Micromechanical component according to one of the preceding Claims 17 to 21, **characterized in that** the anti-adhesive layer consists of silicon.

23. Micromechanical component according to one of the preceding Claims 17 to 22, **characterized in that** the anti-adhesive layer is a silicon nitride.

24. Micromechanical component (1) according to one of Claims 17 to 23, **characterized in that** a fluid-conducting connection (19, 20, 22) is provided between the cavity (3a) of the outlet valve (17) and the outer side of the micromechanical component (1).

25. Micromechanical component (1) according to one of Claims 17 to 24, **characterized in that** the valve opening (12) of the inlet valve (14) and/or the valve opening (22) of the outlet valve (17) is or are formed in the top layer (11).

## Revendications

1. Procédé de fabrication d'un composant micromécanique (1) destiné à commander l'écoulement d'un fluide, le procédé comportant les étapes qui consistent à :
- fabriquer une membrane oscillante (4, 4a) sur une surface (2a) d'une couche porteuse (2), en formant une cavité (3, 3a) sous le même côté de la surface,
- recouvrir la couche de support (2) par une couche intermédiaire (6),
- structurer la couche intermédiaire (6) et
- recouvrir la couche intermédiaire (6) par une couche de recouvrement (11) qui ferme le composant micromécanique (1),
**caractérisé en ce que**
la structuration de la couche intermédiaire (6) s'effectue en formant sur la membrane (4, 4a) un élément d'étanchéité (8, 18) d'une soupape (14, 17) à fluide qui ferme et/ou englobe une ouverture de soupape (12, 22) formée dans la couche de recouvrement (11).

2. Procédé selon la revendication 1, **caractérisé en ce que** la structuration de la couche intermédiaire (6) s'effectue en formant un espace creux (15, 21) autour de l'élément d'étanchéité (8, 18).

3. Procédé selon les revendications 1 ou 2, **caractérisé en ce que** lors de la structuration de la couche intermédiaire (6), une ouverture (9, 20) permettant le passage du fluide jusqu'à la cavité (3, 3a) sous-jacente est formée dans la membrane (4, 4a).

4. Procédé selon l'une des revendications précédentes, **caractérisé en ce que** la première ouverture de passage (9) formée dans la première membrane (4) est structurée de manière à relier la cavité (3) située sous la membrane (4) à l'espace creux (15) qui entoure l'élément d'étanchéité (8).

5. Procédé selon l'une des revendications précédentes, **caractérisé en ce que** la deuxième ouverture de passage (20) formée dans la deuxième membrane (4a) est structurée de manière à relier la cavité (3a) située sous la membrane (4a) à l'ouverture de soupape (22).

6. Procédé selon l'une des revendications précédentes, **caractérisé en ce qu'**une couche antiadhésive (13, 23) est appliquée ou une fonction antiadhésive est réalisée dans la partie (16, 16a) du joint d'étanchéité située entre la couche de recouvrement (11) et l'élément d'étanchéité (8, 18) de la soupape à fluide (14, 17).

7. Procédé selon l'une des revendications précédentes, **caractérisé en ce que** le revêtement antiadhésif est appliqué sur le verre et/ou sur le silicium.

8. Procédé selon l'une des revendications précédentes, **caractérisé en ce que** la fonction antiadhésive est appliquée sur le verre et/ou sur le silicium.

9. Procédé selon l'une des revendications précédentes, **caractérisé en ce que** la couche antiadhésive est constituée de silicium.

10. Procédé selon l'une des revendications précédentes, **caractérisé en ce que** la couche antiadhésive est un nitrure de silicium.

11. Procédé selon l'une des revendications précédentes, **caractérisé en ce que** lors de la fabrication de la première membrane oscillante (4), au moins une autre membrane oscillante (4a) est formée sur la surface (2a) de la couche de support (2) en formant en dessous d'elle une cavité (3a).

12. Procédé selon l'une des revendications précédentes, **caractérisé en ce que** lors de la structuration de la couche intermédiaire (6) et/ou de la couche de support (2), une liaison (24) conduisant le fluide est formée entre le premier espace creux (15) formé autour du premier élément d'étanchéité (8) et un autre espace creux (21) formé autour d'un autre élément d'étanchéité (18).

13. Procédé selon l'une des revendications précédentes, **caractérisé en ce qu'**une troisième membrane oscillante (27, 31) adjacente à la liaison (24) conduisant le fluide et/ou à l'un des deux espaces creux (15, 21) est formée.

14. Procédé selon l'une des revendications précédentes, **caractérisé en ce qu'**un raccordement séparé (26) au fluide est formé pour une cavité (25) fermée par la troisième membrane oscillante (27).

15. Procédé selon l'une des revendications précédentes, **caractérisé en ce qu'**un élément (33) qui, lorsqu'il est actionné, exerce sur la membrane (31) un effet de poussée et/ou un effet de traction, est appliqué sur la troisième membrane oscillante (31).

16. Procédé selon l'une des revendications précédentes, **caractérisé en ce que** la structuration des éléments qui forment ensemble une soupape (14, 17), des membranes (4, 4a), de l'élément d'étanchéité (8, 18), de la couche antiadhésive (16, 16a) et de la couche de recouvrement (11) s'effectue de telle sorte que lorsque le composant micromécanique (1) est à l'état assemblé, l'élément d'étanchéité (8, 18) ferme l'ouverture (12, 22) de la soupape sous précontrainte.

17. Composant micromécanique (1) destiné à commander l'écoulement d'un fluide, et présentant une couche de support (2), une couche intermédiaire structurée (6) et ne couche de recouvrement (11) qui ferme le composant micromécanique (1), une membrane oscillante (4, 4a) et en dessous d'elle une cavité (3, 3a) sont formées sur la surface de la couche porteuse (2) tournée vers la couche intermédiaire (6) en usinant le même côté, pour former une soupape (14, 17) avec un élément d'étanchéité (8, 18) et une ouverture de soupape (12, 22),
**caractérisé en ce que**
des moyens (34, 35) de contrainte de soupape pour une soupape d'admission (14) et/ou une soupape d'échappement (17) sont disposés, vus de l'extérieur, à l'intérieur du composant micromécanique (1) en aval du siège d'étanchéité (16, 16a) de la soupape.

18. Composant micromécanique (1) selon la revendication 17, **caractérisé en ce que** les moyens (34) de contrainte de soupape prévus pour la soupape d'admission (14) et/ou les moyens (35) de contrainte de soupape prévus pour la soupape d'échappement (17) comportent au moins des parties de leur membrane (4) ou (4a).

19. Composant micromécanique (1) selon les revendications 17 ou 18, **caractérisé en ce que** les moyens (34) de contrainte de soupape prévus pour la soupape d'admission (14) et/ou les moyens (35) de contrainte de soupape prévus pour la soupape d'échappement (17) comportent un élément d'étanchéité (8) ou (18) et/ou une couche antiadhésive (13) ou (23).

20. Composant micromécanique selon l'une des revendications 17 à 19 qui précèdent, **caractérisé en ce que** le revêtement adhésif est appliqué sur le verre et/ou sur le silicium.

21. Composant micromécanique selon l'une des revendications 17 à 20 qui précèdent, **caractérisé en ce que** la fonction antiadhésive est appliquée sur le verre et/ou sur le silicium.

22. Composant micromécanique selon l'une des revendications 17 à 21 qui précèdent, **caractérisé en ce que** la couche antiadhésive est constituée de silicium.

23. Composant micromécanique selon l'une des revendications 17 à 22 qui précèdent, **caractérisé en ce que** la couche antiadhésive est un nitrure de silicium.

24. Composant micromécanique (1) selon l'une des revendications 17 à 23, **caractérisé en ce qu'**une liaison (19, 20, 22) est prévue pour conduire le fluide entre la cavité (3a) de la soupape d'échappement (17) et le côté extérieur du composant micromécanique (1).

25. Composant micromécanique (1) selon l'une des revendications 17 à 24, **caractérisé en ce que** l'ouverture (12) de la soupape d'admission (14) et/ou l'ouverture (22) de la soupape d'échappement (17) sont formées dans la couche de recouvrement (11).
